# EUROPÄISCHE PATENTSCHRIFT

(11) **EP 0 428 856 B1**
(45) Veröffentlichungstag und Bekanntmachung des Hinweises auf die Patenterteilung: **16.02.1994**
(21) Anmeldenummer: 90119379.7
(22) Anmeldetag: 10.10.1990
(51) Int. Cl.: A01B 59/06

(54) **Hubstrebe für einen Traktor**
Tractor lift rod
Bielle de relevage pour tracteur

(30) Priorität: 18.11.1989 DE 3938418
(43) Veröffentlichungstag der Anmeldung: 29.05.1991
(73) Patentinhaber: GKN Walterscheid GmbH, D-53784 Lohmar (DE)
(72) Erfinder: Herchenbach, Paul, W-5207 Ruppichteroth (DE); Kamp, Helmut, W-4925 Kalletal-Asendorf (DE); Langen, Hans-Jürgen, W-5020 Frechen (DE)
(74) Vertreter: Harwardt, Günther, Dipl.-Ing.

(56) Entgegenhaltungen:
- AT-B- 341 814
- DE-B- 2 227 179
- FR-A- 1 148 609
- US-A- 3 434 737
- US-A- 4 034 999

## Beschreibung

Die Erfindung betrifft eine längenveränderliche Hubstrebe für einen über einen Kraftantrieb heb- und senkbaren Unterlenker der Anbauvorrichtung eines Traktors, deren erstes Anschlußende zur Befestigung am Kraftarm des Kraftantriebs und deren zweites Anschlußende zur Befestigung am Unterlenker gedacht ist, welche jeweils über gegenläufige Gewinde von entsprechenden Gewindeabschnitten einer Verstellhülse aufgenommen sind, wobei an einem Ende der Verstellhülse der Gewindeabschnitt ein Innengewindeabschnitt ist, in den das zugehörige Anschlußende mit einem Gewindezapfen eingeschraubt ist und wobei die Verstellhülse über einen Griff drehbar ist

Eine längenveränderliche Strebe mit den vorgenannten Merkmalen ist aus der FR-A-1148609 bekannt. Dabei ist der Griff fest mit der Verstellhülse verbunden. Die beiden Anschlußenden können bei unbeabsichtiger Verstellung der Verstellhülse im Sinne der Längenänderung verstellt worden.

Auch aus der US-A 3 056 458 ist bereits eine Dreipunktanbauvorrichtung mit einer Hubstrebe bekannt, bei der die Hubstrebe teleskopierbar ausgebildet ist. Neben der Teleskopierbarkeit ist eine Einstellung über Gewinde vorgesehen. Die freie Teleskopierbarkeit kann aufgehoben werden. Zur Sicherung sind Steckverbindungen vorgesehen, die die beiden Anschlußenden einandergegenüber in bestimmten Arretierpositionen festlegen.

Der Erfindung liegt die Aufgabe zugrunde, eine Hubstrebe zu schaffen, die bezüglich der ineinanderverstellbaren Glieder eine möglichst kurze Baulänge aufweist und bei der darüberhinaus die Betätigung verbessert und ferner eine Arretierung bei Erreichung der erforderlichen Länge ohne besondere Fixiermittel ermöglicht wird.

Diese Aufgabe wird erfindungsgemäß dadurch gelöst, daß die Verstellhülse an dem anderen Ende mit einem Außengewindeabschnitt versehen ist, daß ein Anschlußende eine mit Innengewinde versehene Gewindehülse aufweist, welche auf den Außengewindeabschnitt der Verstellhülse aufgeschraubt ist, und daß der Griff Teil einer Griffhülse ist, die auf der Verstellhülse in Achsrichtung der Hubstrebe verschiebbar angeordnet und wahlweise in eine drehfeste Verbindung mit der Verstellhülse oder in eine gemeinsame drehfeste Verbindung mit der Verstellhülse und der Gewindehülse überführbar ist.

Von Vorteil bei dieser Lösung ist, daß durch die verschiebbare Griffhülse ein Verdrehen der Verstellhülse und damit eine Längenveränderung der Hubstrebe erreicht werden kann. Durch die unabhängige Bewegbarkeit der Griffhülse kann je nach Erfordernis die günstigste Griffposition für die Bedienungsperson erzielt werden. Dies kann jeweils durch Ineingriffbringen der Nut der Griffhülse mit den Zähnen der Verstellhülse bewirkt werden. Darüberhinaus kann aber auch durch Überschieben der Griffhülse über die Zähne sowohl der Verstellhülse als auch der Gewindehülse eine Arretierung gewährleistet sein, so daß sich die Verdrehposition der Gewindehülse gegenüber der Verstellhülse nicht mehr ändern kann. Damit ist die Länge derHubstrebe festgelegt. Darüberhinaus ist es auch denkbar, die Griffhülse nur in eine Eingriffsposition mit der Gewindehülse zu verschieben, so daß zusätzlich ggfs. noch eine Feineinstellung durch Verstellung nur der Gewindehülse auf der Verstellhülse erreicht werden kann.

Ein weiterer Vorteil besteht darin, daß die Griffhülse in Arretierposition den Außengewindeabschnitt der Verstellhülse überdeckt und somit gegen Beschädigungen schützt.

Die vorgesehene Arretiermöglichkeit wird durch die besondere Anordnung der Gewindeabschnitte der Verstellhülse erreicht. Gleichzeitig ist durch die Kombination Außengewindeabschnitt und Innengewindeabschnitt der Vorteil gegeben, daß eine kürzestmögliche Länge bzw. größtmögliche Verschiebung erreicht. Die gesamte Länge der Verstellhülse steht für das Eintauchen des Gewindezapfens des anderen Anschlußendes zur Verfügung. Die Montage der Hubstrebe erfolgt in der Regel so, daß das die Gewindehülse aufweisende Anschlußende dem Unterlenker zugeordnet ist, während das andere Anschlußende einem Kraftarm des Kraftantriebes zugeordnet ist.

Nach einem weiteren Merkmal der Erfindung ist vorgesehen, daß die Verstellhülse und die Gewindehülse jeweils mit mindestens einem von deren Außenflächen radial vorstehenden Zahn versehen sind und daß die Griffhülse wenigstens eine den Zähnen angepaßte und axial verlaufende Nut in ihrer Bohrung aufweist, mit welcher sie über die Zähne von Gewindehülse und/oder Verstellhülse schiebbar ist. Als Mittel zur drehfesten Verbindung zwischen der Gewindehülse und/oder der Verstellhülse sind also die Zähne bzw. Nuten vorgesehen.

Um die Griffhülse in die günstigste Position jeweils überführen zu können, ist es zweckmäßig, eine Freidrehposition vorzusehen, in der die Griffhülse außer Eingriff mit der Verstellhülse und der Gewindehülse ist.

Zur weiteren Erhöhung der Anzahl der Angriffspositionen, in welche die Griffhülse zu der Verstellhülse bringbar ist, ist vorgeschlagen, die Griffhülse an ihrer der Gewindehülse zugewandten Stirnfläche mit wenigstens einem zur Nut umfangsversetzten und vorstehenden Anschlag zu versehen, der zu den der Verstellhülse zugeordneten Zähnen in drehfeste Anlage bringbar ist. Bevorzugt sind hierzu die Gewindehülse und die Verstellhülse mit zwei diametral gegenüberliegenden Zähnen und die Griffhülse mit vier rechtwinklig zueinander versetzten Nuten versehen.

Obwohl die Zähne der Verstellhülse unmittelbar angeformt sein können, ist es zweckmäßig, diese einem scheibenartigen Verdrehstern zuzuordnen, der mit der Verstellhülse verbunden ist.

Zur Lagesicherung der Griffhülse ist vorgesehen, daß die Griffhülse an ihrer der Gewindehülse abgewandten Stirnfläche mit einem Anschlagbund versehen ist. Durch die annähernd vertikale Anordnung der Hubstrebe sorgt der Anschlagbund dafür, daß die Griffhülse in der richtigen Position zu der Verstellhülse und der Gewindehülse gehalten wird.

Um die Variationsmöglichkeit der Angriffpositionierung der Griffhülse zu optimieren, ist vorgesehen, daß jeweils zwischen zwei Nuten ein Anschlag vorgesehen ist. Es sind also insgesamt vier Anschläge und vier Nuten vorgesehen, so daß sich eine erhebliche Steigerung der Angriffspositionen ergibt.

Ein bevorzugtes Ausführungsbeispiel der Erfindung ist in der Zeichnung schematisch dargestellt.

Es zeigt
- Figur 1: schematisch einen Schlepperheck mit einer Dreipunktanbauvorrichtung,
- Figur 2: einen Längsschnitt durch eine Hubstrebe bei in Freigangposition befindlicher Griffhülse,
- Figur 3: einen Längsschnitt entsprechend Figur 2, jedoch mit in Verstellposition befindlicher Griffhülse,
- Figur 4: den Längsschnitt gemäß Figur 2 bei in Arretierposition befindlicher Griffhülse,
- Figur 5: einen Schnitt B-B gemäß Figur 3,

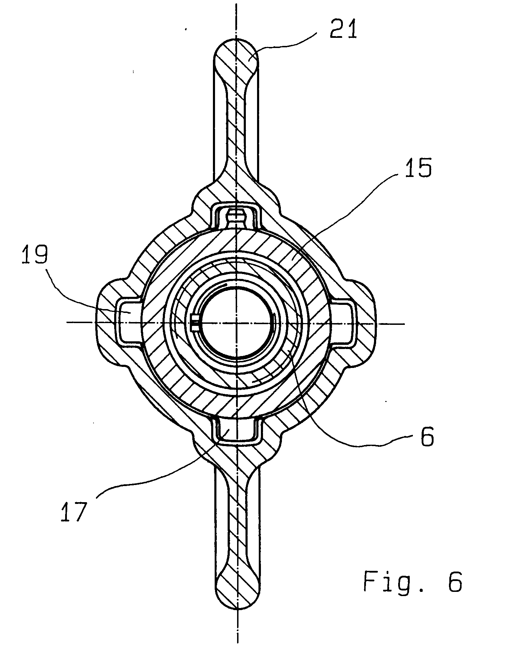

- Figur 6: einen Schnitt A-A gemäß Figur 4,

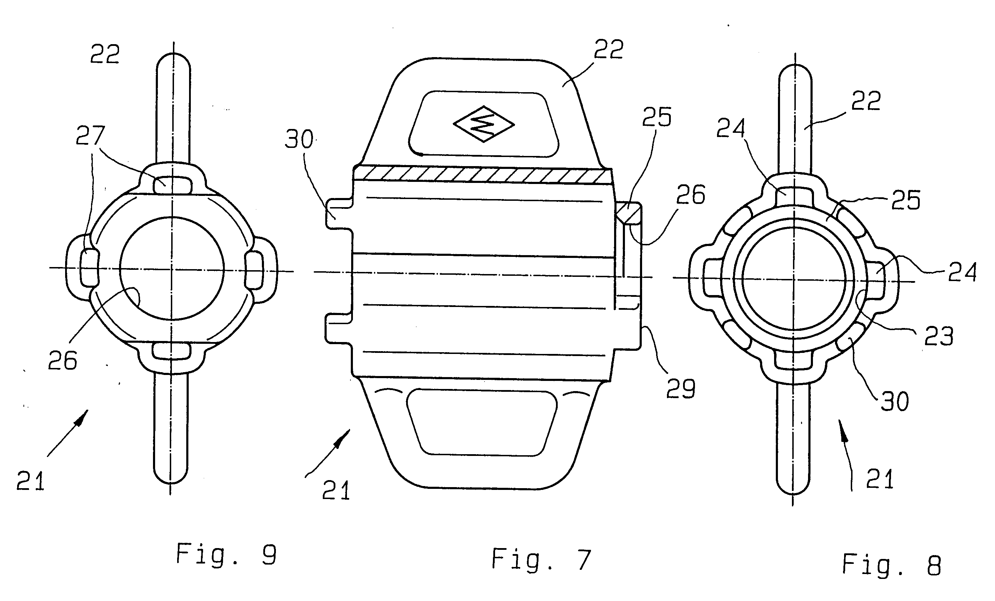

- Figur 7: die Griffhülse als Einzelteil, teilweise längs geschnitten,
- Figur 8: eine Ansicht auf die die Anschläge aufweisende Stirnfläche der Griffhülse nach Figur 7 und
- Figur 9: eine Ansicht auf die den Anschlagbund aufweisende Stirnfläche der Griffhülse.

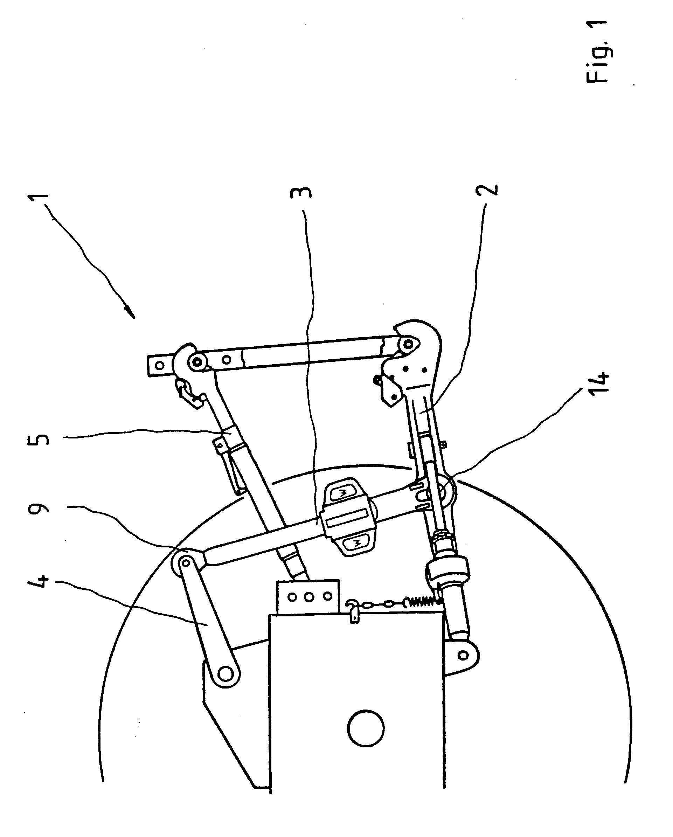

Der in Figur 1 dargestellte Traktor 1 besitzt an seinem Heck eine Dreipunktanbauvorrichtung. Die Dreipunktanbauvorrichtung umfaßt die beiden Unterlenker 2, von denen jedoch nur einer zu sehen ist, da der zweite in der Zeichenebene mit Abstand zum ersten angeordnet ist. Die beiden Unterlenker 2 sind seitlich zur Längsachse des Traktors 1 versetzt angeordnet. Die Unterlenker 2 sind über einen nicht dargestellten Kraftantrieb des Traktors 1 heb- und senkbar. Hierzu sind zwei Kraftarme 4 vorgesehen, an die jeweils ein Unterlenker 2 über die Hubstrebe 3 angeschlossen ist. Das obere Anschlußende 9 ist beispielsweise als Kugelgelenk ausgebildet, während das untere Anschlußende 14 dem Unterlenker 2 zugeordnet ist und den Unterlenker gabelartig übergreift. Die Hubstrebe 3 ist mit dem Unterlenker 2 und dem zugehörigen Kraftarm 4 gelenkig über eine Bolzenverbindung verbunden.

Eine Hubstrebe 3 ist detailliert anhand der Zeichnungsfiguren 2 bis 9 beschrieben. Die Hubstrebe 3 weist eine rohrförmige Verstellhülse 6 auf, welche zum einen Ende hin mit einem Außengewindeabschnitt 7 und am anderen Ende mit einem Innengewindeabschnitt 8 versehen ist. Dem Innengewindeabschnitt 8 ist das Anschlußende 9 mit einem Kugelgelenk zugeordnet. An das Kugelgelenk des Anschlußendes 9 ist ein Gewindezapfen 10 angeschlossen, der in den Innengewindeabschnitt 8 in der Bohrung der Verstellhülse 6 eingeschraubt ist. Die Steigung der beiden Gewindeabschnitte 7,8 der Verstellhülse 6 verlaufen gegenläufig. Der Gewindeabschnitt des Gewindezapfens ist mit 11 bezeichnet. An diesen schließt sich zum Kugelgelenk hin der zylindrische Abschnitt 12 an. Der Verstellhülse 6 ist eine Abdichtkappe 13 zugeordnet, die sich an den zylindrischen Abschnitt 12 des Anschlußendes 9 abdichtend anlegt. In diese kann beispielsweise auch ein Schmiernippel für die Versorgung der beiden ineinandergreifenden Gewinde des Gewindezapfens 10 und des in der Bohrung vorgesehenen Innengewindeabschnittes 8 mit Schmiermittel eingeformt sein.

Auf den Außengewindeabschnitt 7 der Verstellhülse 6 ist das zweite Anschlußende 14 der Hubstrebe 3 aufgeschraubt. Es ist erkennbar, daß das zweite Anschlußende 14 eine Anschlußgabel umfaßt, welche an den Unterlenker 2 anzuschließen ist.Ferner umfaßt das zweite Anschlußende 14 eine Gewindehülse 15, deren Bohrung mit Innengewinde 16 versehen ist. Mit diesem Innengewinde 16 ist die Gewindehülse 15 auf den Außengewindeabschnitt 7 der Verstellhülse 6 aufgeschraubt. Von der Außenfläche der Gewindehülse 15 stehen zwei sich diametral gegenüberliegende Zähne 17 radial ab. Im Abstand zum Außengewindeabschnitt 7 ist auf dem Außenumfang der Verstellhülse 6 ein scheibenartig gestalteter Verdrehstern 18 fest angebracht. Der Verdrehstern 18 weist zwei Paare von zu den Zähnen 17 der Gewindehülse 15 korrespondierende Zähne 19 auf. Hierdurch wird die Anzahl von möglichen Arretierpositionen erhöht. Es ist nur ein Paar erforderlich. Die beiden Zähne 17 und 19 sind von der Querschnittsform her gleich ausgebildet.

Die Ausbildung der Zähne 17,19 von Gewindehülse 15 und Verdrehstern 18 ist im Querschnitt aus den Zeichnungsfiguren 5 und 6 näher erkennbar.

Auf der Außenfläche 20 der Verstellhülse 6 ist ferner eine Griffhülse 21 verschiebbar angeordnet. Von der Außenfläche der Griffhülse 21 stehen, wie insbesondere aus den Zeichnungsfiguren 7 bis 9 erkennbar, zwei diametral gegenüberliegende Griffe 22 radial ab. Diese dienen zum Eingreifen von Hand für die Verdrehung der Verstellhülse 6. Die Griffhülse 21 weist ferner eine Bohrung 23 auf, in welcher umfangsverteilt vier axial verlaufende Nuten 24 vorhanden sind. Die Nuten 24 und der Durchmesser der Bohrung 23 sind so gestaltet, daß die Griffhülse 21 über den Verdrehstern 18 mit seinen Zähnen 19 und über die Zähne 17 und die Außenkontur der Gewindehülse 15 schiebbar ist. Ferner weist die Griffhülse 21 an ihrer der Gewindehülse 15 abgewandten Stirnfläche 29 einen radial nach innen in die Kontur der Bohrung 23 hineinragenden Anschlagbund 25 auf. Der Anschlagbund 25 ist ebenfalls durchbohrt. Die Bohrung ist mit 26 bezeichnet. Sie ist dem Außendurchmesser der Verstellhülse 6 so angepaßt, daß eine leichte Verschiebbarkeit der Griffhülse 21 auf der Verstellhülse 6 gegeben ist. Im Bereich der Nuten 24 sind in der Stirnfläche 29 Durchbrüche 27 vorgesehen, die dazu dienen, daß sich in den Nuten 24 kein Schmutz ablagern kann und dieser bei der Verschiebung der Griffhülse 21 über die Zähne 19 durch die Durchbrüche 27 nach außen herausgeschoben werden kann.

Von der der Gewindehülse 15 zugewandten Stirnfläche 28 der Griffhülse 21 stehen Anschläge 30 axial vor. Es sind insgesamt vier Anschläge 30 vorgesehen, die umfangsversetzt zu den Nuten 24 angeordnet sind. Jeweils zwischen zwei in Umfangsrichtung aufeinander folgenden Nuten 24 ist ein Anschlag 30 vorhanden.

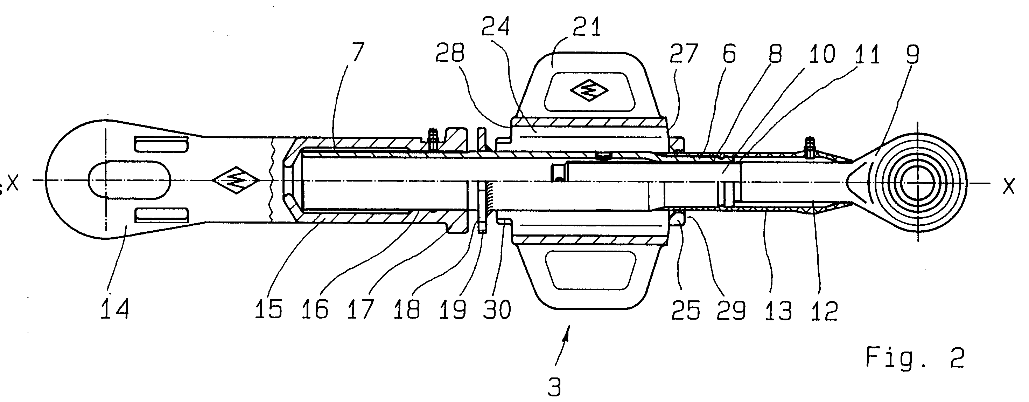

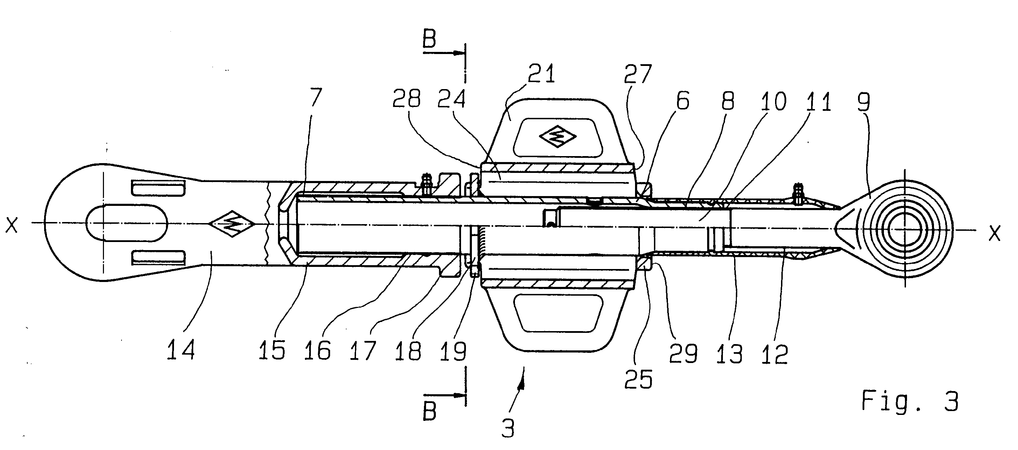

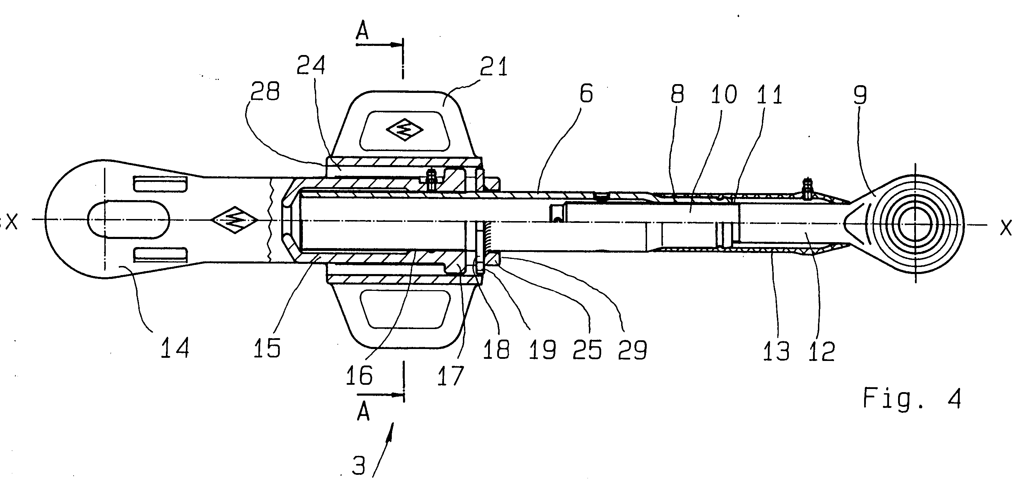

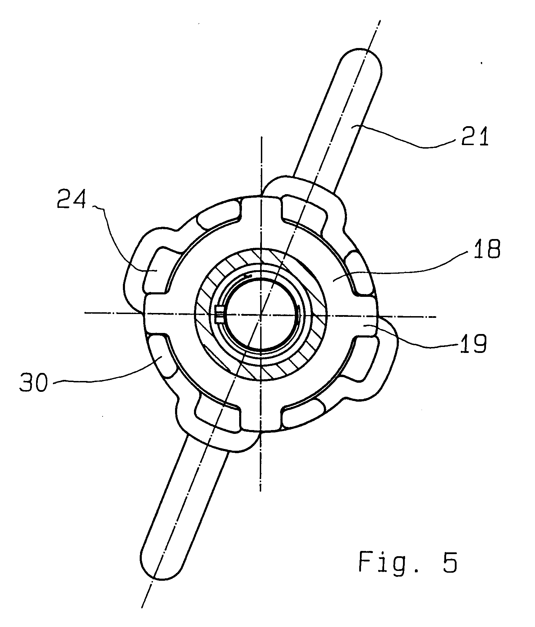

Bei der in Figur 2 dargestellten Position befindet sich die Griffhülse 21 in der Freidrehposition. Die Griffhülse 21 ist in dieser Position von Hand frei drehbar auf der Verstellhülse 6. Dies dient dazu, die Griffhülse 21 in die richtige Angriffsposition zum Verdrehstern 18 zu bringen, um einen möglichst großen Hebelarm für die Verdrehung der Verstellhülse 6 zur Längenänderung der Hubstrebe 3 aufgrund der gegenläufigen Gewindeabschnitte 7 und 8 zu erreichen. Hierzu können alle Anschläge 30, wie insbesondere aus Figur 5 erkennbar, in Umfangsanlage zu den vier Zähnen 19 des mit der Verstellhülse 6 verbundenen Verdrehsterns 18 gebracht werden (Figur 3 und 5). Es ist jedoch auch möglich, die Nuten 24 der Griffhülse 21 zu nutzen, um eine drehfeste Verbindung zu den Zähnen 19 des Verdrehsterns 18 herzustellen. Ist die richtige Länge erreicht, ist eine Arretierung dadurch möglich, daß nachdem die Zähne 19 des Verdrehsterns 18 zu den Zähnen 17 der Gewindehülse 15 in eine ausgerichtete Position gebracht worden sind, die Griffhülse 21 mit den Nuten 24 sowohl über die Zähne 19 des Verdrehsterns 18, als auch die Zähne 17 der Gewindehülse 15 verschoben wird. Die Verschiebung im montierten Zustand der Hubstrebe 3 am Traktor 1 nach unten erfolgt so weit, bis der Anschlagbund 25 der Griffhülse 21 am Verdrehstern 18 zur Anlage kommt. Da die Hubstrebe 3 im wesentlichen vertikal angeordnet ist, wird die Griffhülse 21 aufgrund ihres Eigengewichtes auch in dieser Position, das heißt, mit ihrem Anschlagbund 25 in Anlage zum Verdrehstern 18, gehalten. Die Arretierposition ist aus Figur 4 ersichtlich. Da das mit einer Anschlußgabel ausgebildete Anschlußende 14, dem die Gewindehülse 15 zugeordnet ist, am Unterlenker 2 undrehbar gehalten ist, wird auch eine Längenveränderung selbst dadurch verhindert, daß nur die Verstellhülse 6 und die Gewindehülse 15 über die Griffhülse 21 zueinander blockiert sind. Eine Verdrehung des weiteren Anschlußendes 9 kann nicht erfolgen.

### Bezugszeichenliste

- 1: Traktor
- 2: Unterlenker
- 3: Hubstrebe
- 4: Kraftarm
- 5: Oberlenker
- 6: Verstellhülse
- 7: Außengewindeabschnitt der Verstellhülse
- 8: Innengewindeabschnitt der Verstellhülse
- 9: erstes Anschlußende mit Kugelgelenk
- 10: Gewindezapfen
- 11: Gewinde
- 12: zylindrischer Abschnitt des Gewindezapfens
- 13: Abdichtkappe
- 14: zweites Anschlußende mit Anschlußgabel
- 15: Gewindehülse
- 16: Innengewinde der Gewindehülse
- 17: Zähne auf Außenfläche der Gewindehülse
- 18: Verdrehstern
- 19: Zähne am Verdrehstern der Verstellhülse
- 20: Außenfläche der Verstellhülse
- 21: Griffhülse
- 22: Griff
- 23: Bohrung in Griffhüle
- 24: Nuten in Griffhülse
- 25: Anschlagbund
- 26: Bohrung im Anschlagbund
- 27: Durchbruch
- 28: Stirnfläche der Griffhülse (der Gewindehülse zugewandt)
- 29: Stirnfläche der Griffhülse (der Gewindehülse abgewandt)
- 30: Anschläge
- x-x: Achse

## Patentansprüche

1. Längenveränderliche Hubstrebe (3) für einen über einen Kraftantrieb heb- und senkbaren Unterlenker (2) der Anbauvorrichtung eines Traktors (1), deren erstes Anschlußende (9) zur Befestigung (4) am Kraftarm des Kraftantriebs und deren zweites Anschlußende (14) zur Befestigung am Unterlenker (2) gedacht ist, welche jeweils über gegenläufige Gewinde von entsprechenden Gewindeabschnitten (7,8) einer Verstellhülse (6) aufgenommen sind, wobei an einem Ende der Verstellhülse (6) der Gewindeabschnitt ein Innengewindeabschnitt (8) ist, in den das zugehörige Anschlußende mit einem Gewindezapfen (10) eingeschraubt ist und wobei die Verstellhülse (6) über einen Griff drehbar ist,
dadurch gekennzeichnet,
daß die Verstellhülse (6) an dem anderen Ende mit einem Außengewindeabschnitt (7) versehen ist, daß ein Anschlußende (14) eine mit Innengewinde (16) versehene Gewindehülse (15) aufweist, welche auf den Außengewindeabschnitt (7) der Verstellhülse (6) aufgeschraubt ist, und daß der Griff Teil einer Griffhülse (21) ist, die auf der Verstellhülse (6) in Achsrichtung (x-x) der Hubstrebe (3) verschiebbar angeordnet und wahlweise in eine drehfeste Verbindung mit der Verstellhülse (6) oder in eine gemeinsame drehfeste Verbindung mit der Verstellhülse (6) und der Gewindehülse (15) überführbar ist.

2. Hubstrebe nach Anspruch 1,
dadurch gekennzeichnet,
daß die Verstellhülse (6) und die Gewindehülse (15) jeweils mit mindestens einem von deren Außenflächen radial vorstehenden Zahn (17,19) versehen sind und daß die Griffhülse (21) wenigstens eine den Zähnen (17,19) angepaßte und axial verlaufende Nut (24) in ihrer Bohrung (23) aufweist, mit welcher sie über die Zähne (17,19) von Gewindehülse (15) und/oder Verstellhülse (6) schiebbar ist.

3. Hubstrebe nach Anspruch 1,
dadurch gekennzeichnet,
daß die Griffhülse (21) in eine Freidrehposition außer Eingriff mit der Verstellhülse (6) und der Gewindehülse (15) verschiebbar ist.

4. Hubstrebe nach den Ansprüchen 2 und 3,
dadurch gekennzeichnet,
daß die Griffhülse (21) an ihrer der Gewindehülse (15) zugewandten Stirnfläche (28) mit wenigstens einem zur Nut (24) umfangsversetzt vorstehenden Anschlag (30) versehen ist, der zu den der Verstellhülse (6) zugeordneten Zähnen (19) in drehfeste Anlage bringbar ist.

5. Hubstrebe nach einem der Ansprüche 1, 2 oder 4,
dadurch gekennzeichnet,
daß die Gewindehülse (15) und die Verstellhülse (6) mit zwei diametral gegenüberliegenden Zähnen (17,19) und die Griffhülse (21) mit vier rechtwinklig zueinander versetzten Nuten (24) versehen ist.

6. Hubstrebe nach einem oder mehreren der Ansprüche 1 bis 5,
dadurch gekennzeichnet,
daß die Zähne (19) der Verstellhülse (6) einem scheibenartigen Verdrehstern (18) zugeordnet sind, der mit der Verstellhülse (6) verbunden ist.

7. Hubstrebe nach Anspruch 2,
dadurch gekennzeichnet,
daß die Griffhülse (21) an ihrer der Gewindehülse (15) abgewandten Stirnfläche (29) mit einem Anschlagbund (25) versehen ist.

8. Hubstrebe nach Anspruch 7,
dadurch gekennzeichnet,
daß der Anschlagbund (25) im Bereich der Nuten (24) mit je einem Durchbruch (27) versehen ist.

9. Hubstrebe nach den Ansprüchen 4 und 5,
dadurch gekennzeichnet,
daß jeweils zwischen zwei Nuten (24) ein Anschlag (30) angeordnet ist.

## Claims

1. A length-adjustable lifting rod (3) for the lower steering arm (2) of the attaching device of a tractor (1), which lifting rod (3) may be raised and lowered by a power drive, whose first connecting end (9) is intended for being secured (4) to the power arm of the power drive and whose second connecting end (14) is intended for being secured to the lower steering arm (2), which ends are each received, by opposed threads, in the respective threaded portions (7, 8) of an adjusting sleeve (6), the threaded portion at one end of the adjusting sleeve (6) being an internally threaded portion (8) for threading in the associated connecting end by means of a threaded journal (10), and the adjusting sleeve (6) being rotatable by means of a handle,
characterised in
that the adjusting sleeve (6), at its other end, is provided with an externally threaded portion (7), that one connecting end (14) comprises a threaded sleeve (15) which is provided with an inner thread (16) and which is threaded on to the externally threaded portion (7) of the adjusting sleeve (6) and that the handle forms part of a handle sleeve (21) which is movably arranged on the adjusting sleeve (6) in the axial direction (x-x) of the lifting rod (3) and which, optionally, may be transferred into a non-rotating connection with the adjusting sleeve (6) or into a joint non-rotating connection with the adjusting sleeve (6) and the threaded sleeve (15).

2. A lifting rod according to claim 1,
characterised in
that the adjusting sleeve (6) and the threaded sleeve (15) are each provided with at least one tooth (17, 19) radially projecting from their outer faces and that the handle sleeve (21), in its bore (23), comprises at least one axially extending groove (24) which is adapted to the teeth (17, 19) and which allows the handle sleeve (21) to be slid over the teeth (17, 19) of the threaded sleeve (15) and/or the adjusting sleeve (6).

3. A lifting rod according to claim 1,
characterised in
that the handle sleeve (21) may be moved into a freely rotating position where it is disengaged from the adjusting sleeve (6) and the threaded sleeve (15).

4. A lifting rod according to claims 2 and 3,
characterised in
that the handle sleeve (21), at its end face (28) facing the threaded sleeve (15), is provided with a stop (30) which is circumferentially offset relative to the groove (24) and which may be made to rest non-rotatingly against the teeth (19) associated with the adjusting sleeve (6).

5. A lifting rod according to any one of claims 1, 2 or 4,
characterised in
that the threaded sleeve (15) and the adjusting sleeve (6) are provided with two diametrically opposed teeth (17, 19) and that the handle sleeve (21) is provided with four grooves (24) offset at right angles relative to one another.

6. A lifting rod according to one or several of claims 1 to 5,
characterised in
that the teeth (19) of the adjusting sleeve (6) are associated with a disk-like rotatable cross element (18) which is connected to the adjusting sleeve (6).

7. A lifting rod according to claim 2,
characterised in
that the handle sleeve (21), at its end face facing away from the threaded sleeve (15), is provided with a stop collar (25).

8. A lifting rod according to claim 7,
characterised in
that in the region of the grooves (24), the stop collar (25) is provided with an aperture (27).

9. A lifting rod according to claims 4 and 5,
characterised in
that a stop (30) is arranged between each two grooves (24).

## Revendications

1. Tirant de levage (3) à longueur variable pour un bras inférieur (2) qui se lève et s'abaisse par entraînement mécanique dans un dispositif d'attelage d'un tracteur (1), dont la première extrémité de raccordement (9) est conçue pour la fixation (4) sur le bras de force de l'entraînement mécanique et dont la seconde extrémité de raccordement (14) est conçue pour la fixation sur le bras inférieur (2), chacune des extrémités étant retenue par des filetages et taraudages opposés sur des segments correspondants (7, 8) d'une douille de réglage (6), le segment se trouvant sur une extrémité de la douille de réglage (6) étant un segment de taraudage (8) dans lequel est vissé l'extrémité de raccordement correspondante avec un tenon fileté (10), et la douille de réglage (6) pouvant être tournée par une poignée, caractérisé en ce que la douille de réglage (6) est pourvue sur l'autre extrémité d'un segment de filetage (7), en ce qu'une extrémité de raccordement (14) présente une douille (15) à taraudage (16) qui est vissée sur le segment de filetage (7) de la douille de réglage (6), et en ce que la poignée fait partie d'un manchon de poignée (21) qui est agencé à déplacement sur la douille de réglage (6) dans la direction axiale (x-x) du tirant de levage (3) et qui peut être déplacé au choix dans une liaison solidaire en rotation avec la douille de réglage (6) ou en liaison commune solidaire en rotation avec la douille de réglage (6) et la douille taraudée (15).

2. Tirant de levage selon la revendication 1, caractérisé en ce que la douille de réglage (6) et la douille taraudée (15) sont chacune pourvues d'au moins une dent (17, 19) faisant saillie radialement depuis leur face extérieure et en ce que le manchon de poignée (21) présente dans son alésage au moins une gorge (24) adaptée aux dents (17, 19) et s'étendant axialement, gorge avec laquelle il peut être déplacé via les dents (17, 19) de la douille taraudée (15) et/ou de la douille de réglage (6).

3. Tirant de levage selon la revendication 1, caractérisé en ce que le manchon de poignée (21) peut être déplacé dans une position de rotation libre hors d'engagement avec la douille de réglage (6) et la douille taraudée (15).

4. Tirant de levage selon la revendication 2 et 3, caractérisé en ce que le manchon de poignée (21) est pourvu sur sa face (28) orientée vers la douille taraudée (15) d'au moins une butée (30) en saillie décalée circonférentiellement par rapport à la gorge (24), butée qui peut être amenée en position solidaire en rotation avec les dents (19) associées à la douille de réglage (6).

5. Tirant de levage selon l'une des revendications 1, 2 ou 4, caractérisé en ce que la douille taraudée (15) et la douille de réglage (6) sont pourvues de deux dents (17, 19) diamétralement opposées et le manchon de poignée (21) est pourvu de quatre gorges (24) décalées à angles droits les unes par rapport aux autres.

6. Tirant de levage selon l'une ou plusieurs des revendications 1 à 5, caractérisé en ce que les dents (19) de la douille de réglage (6) sont associées à une étoile de rotation (18) en forme de disque qui est reliée à la douille de réglage (6).

7. Tirant de levage selon la revendication 2, caractérisé en ce que le manchon de poignée (21) est pourvu d'un bourrelet de butée (25) sur sa face (29) opposée à la douille taraudée (15).

8. Tirant de levage selon la revendication 7, caractérisé en ce que le bourrelet de butée (25) est pourvu d'un percement (27) dans la région de chaque gorge.

9. Tirant de levage selon les revendications 4 et 5, caractérisé en ce qu'une butée (30) est disposée respectivement entre deux gorges (24).
